# EUROPÄISCHE PATENTSCHRIFT

(11) **EP 2 844 615 B1**
(45) Veröffentlichungstag und Bekanntmachung des Hinweises auf die Patenterteilung: **13.04.2016**
(21) Anmeldenummer: 13729674.5
(22) Anmeldetag: 11.06.2013
(51) Int. Cl.: C02F 1/20, C02F 1/24, C02F 5/02, D21H 21/02, D21H 21/04, C02F 1/66, C02F 103/28, C02F 3/22, C02F 1/52

(54) **VERFAHREN ZUM ENTKALKEN VON PROZESSWASSER**
METHOD FOR DECALCIFYING PROCESS WATER
PROCÉDÉ DE DÉTARTRAGE DE L'EAU DE PROCÉDÉ

(30) Priorität: 12.06.2012 DE 102012209756
(43) Veröffentlichungstag der Anmeldung: 11.03.2015
(73) Patentinhaber: Siemens Aktiengesellschaft, 80333 München (DE)
(72) Erfinder: SCHABEL, Samuel, 64297 Darmstadt-Eberstadt (DE); SCHWARZ, Hermann, 97084 Würzburg (DE); WEIGMANN, Josef, 96169 Lauter (DE); HARTMANN, Werner, 91085 Weisendorf (DE)
(86) Internationale Anmeldenummer: PCT/EP2013/062025
(87) Internationale Veröffentlichungsnummer: WO 2013/186210

(56) Entgegenhaltungen:
- WO-A1-2008/028650
- US-A1- 2010 018 918
- DATABASE WPI Week 200316 Thomson Scientific, London, GB; AN 2003-165145 XP002711645, -& SE 524 338 C2 (IFO VATTENRENING AB) 27. Juli 2004 (2004-07-27)

## Beschreibung

Die vorliegende Erfindung betrifft ein Verfahren zum Entkalken von Prozesswasser.

In industriellen Prozessen wird eine möglichst hohe Rückführungsquote von eingesetztem Prozesswasser angestrebt, um den Wasserverbrauch und die damit zusammenhängenden Kosten gering zu halten. Hierzu werden Reinigungsstufen verwendet, mit welchen die Wasserqualität so verbessert wird, dass eine Rückführung in den Prozess möglich ist.

In der Papierproduktion basierend auf Altpapier als Rohstoff ergibt sich durch geschlossene Prozesswasserkreisläufe eine Aufsalzung, die vor allem durch den im Altpapier enthaltenen Füllstoff Calciumcarbonat (= CaCO₃) hervorgerufen wird, dessen Einsatz als Füllstoff und Pigment in Papier zu Ungunsten von Kaolin in den vergangenen Jahren zugenommen hat. Dies führt unter den im Produktionsprozess herrschenden Bedingungen wie einer Temperatur größer 40°C und lokal variierenden pH-Werten allgemein zu erheblichen Ablagerungen und Ausfällungen von Kalk in Papierproduktions- und Abwasseraufbereitungsanlagen, die deren Betrieb stören können. Auch in anderen Industrien kann hartes Wasser zu unerwünschten Kalkablagerungen in der Produktion und in der Wasseraufbereitung führen.

Bisher großtechnisch eingesetzte Entkalkungsanlagen, die in den Prozesswasserkreislauf eingefügt sind oder in der Abwasseraufbereitung betrieben werden, basieren auf einer chemischen Fällung von Calciumcarbonat durch eine Zugabe von Fällungschemikalien, insbesondere Ätzsoda (= NaOH) und/oder Kalkmilch (= Ca(OH)₂), welche eine Änderung des pH-Werts ins Basische bewirken. Die Abtrennung des gefällten Calciumcarbonats aus dem Prozesswasser erfolgt dann durch Sedimentation und/oder Druckentspannungsflotation (engl.: DAF = Dissolved Air Flotation).

DE 102004047010 A1 (KOWITEC) 30.03.2006 beschreibt eine Vorrichtung zur Reinigung von Wasser in der Papierindustrie, wobei auf Drücke im Bereich zwischen 2 und 10 bar verdichtetes und mit komprimierter Luft versetztes Wasser einer Expansionseinrichtung zugeführt wird. Beim Druckabbau des Wassers entstehende feine Luftbläschen tragen Feststoffpartikel an die Wasseroberfläche. Durch Zugabe eines den pH-Wert beeinflussenden Additivs wie NaOH kann im Wasser gelöstes Calciumcarbonat gefällt und wie andere Feststoffe aus dem Wasser abgeführt werden.

WO2008/028650 A1, US2010/018918 A1 und SE524338 C2 sind weitere Beispiele des relevanten Standes der Technik.

Nachteilig an diesen bekannten Verfahren ist, dass sie einen hohen Chemikalienverbrauch haben und ineffizient sind.

Es ist somit eine Aufgabe der vorliegenden Erfindung, ein verbessertes Verfahren zur Entkalkung von Prozesswasser anzugeben.

Diese Aufgabe wird hinsichtlich des Verfahrens erfindungsgemäß durch ein Verfahren mit den in Anspruch 1 angegebenen Merkmalen gelöst.

Der Erfindung liegt die Erkenntnis zugrunde, dass es allein mit einer geeigneten Belüftung des Prozesswassers möglich ist, sowohl die Fällung von Kalk im Prozesswasser als auch die Trennung des Kalks vom Prozesswasser vorzunehmen. Auf eine Lösung von Gas unter Überdruck im Prozesswasser und eine Druckerniedrigung, die sog. Entspannung, zur Generierung von Gasblasen wird erfindungsgemäß verzichtet. Stattdessen nutzt die Erfindung ausschließlich eine Verschiebung des Dissoziationsgleichgewichts der Kohlensäure: Durch ein Einbringen von Gas unter atmosphärischem Druck, vorzugsweise in Form von Umgebungsluft, in das Prozesswasser wird gasförmiges CO₂, welches sich oberhalb einer Wasseroberfläche des Prozesswassers befindet, verdrängt. Durch diese Änderung des CO₂-Partialdrucks oberhalb der Wasseroberfläche des Prozesswassers wird bewirkt, dass im Prozesswasser gelöstes CO₂ aus der Lösung in die Gasform übergeht. Das auf diese Weise gebildete gasförmige CO₂ entweicht aus dem Prozesswasser. Hierdurch verschiebt sich das Dissoziationsgleichgewicht der Kohlensäure in Richtung der Carbonat-Ionen, also auf die rechte Seite folgender Reaktionsgleichung eq. 1:

Ca²⁺ + HCO₃⁻ + OH⁻ <--> CaCO₃ + H₂O (eq. 1)

Somit wird das Löslichkeitsprodukt des Calciumcarbonats überschritten und Calciumcarbonat fällt aus, d. h. es bildet sich Kalkstein. Partikel des gefällten Calciumcarbonats haften an den Gasblasen an und werden mit diesen an die Oberfläche getragen, wo sie zusammen mit dem durch die Gasblasen gebildeten Schaum ausgetragen, z.B. abgesaugt oder abgeschöpft, werden können.

Zugleich wird durch eine Verschiebung des Dissoziationsgleichgewichts der Kohlensäure in Richtung der Carbonat-Ionen, also auf die rechte Seite der Reaktionsgleichung eq. 1, der pH-Wert des Prozesswassers erhöht. Diese Verschiebung "ins Basische" unterstützt eine Fällung von Calciumcarbonat. Das vorliegende Verfahren nutzt also das Einbringen von Gas unter Atmosphärendruck, z.B. von Umgebungs-Luft, in das Prozesswasser, um CO₂ zu strippen und den pH-Wert zu heben.

Flotations-Vorrichtungen und -Verfahren zum Belüften von Faserstoffsuspensionen aus Altpapier sind bekannt, siehe z.B. DE 2914392 B1 (Feldmühle; Lamort) 28.02.1980 oder DE 4116916 A1 (Sulzer-Escher Wyss) 03.12.1992. Diese dienen dazu, färbende Substanzen, insbesondere Druckfarben, durch einen Flotations-Prozess an Luftblasen anzulagern und mit diesen als Schaum abzuführen. Diese sogenannte Deinking-Flotation ist also ein physikalisches Verfahren zur Abtrennung von Druckfarbenpartikeln aus einer Altpapier-Faserstoffsuspension. Erfindungsgemäß kann nun eine solche Deinking-Flotation zur Entkalkung von Prozesswasser angewendet werden. Analog dazu können auch aus der Erzgewinnung bekannte Flotationszellen, z.B. eine Hybrid-Flotationszelle, zur Entkalkung von Prozesswasser eingesetzt werden.

Durch eine Flotation, d.h. eine starke Belüftung des Prozesswassers mittels einer Düse, unter Bildung von Schaum ist es möglich, einen Großteil des Calciumcarbonats mit dem Schaum auszuschleusen. Die vorliegende Erfindung stellt somit ein einstufiges, auf einem Flotationsverfahren basierendes Entkalkungsverfahren mit hoher Entkalkungseffizienz und geringen Entkalkungskosten bereit.

Bisherige zur Entkalkung verwendete Verfahren können vereinfacht als eine Folge folgender Schritte betrachtet werden: Zugabe von Chemikalien -> Luftzuführung -> Trennung durch Entspannungsflotation -> Entwässerung. Demgegenüber kann das erfindungsgemäße Verfahren vereinfacht als eine Folge folgender Schritte betrachtet werden: Belüftung und Ausschleusung des Schaums in einem einzigen Schritt-> Entwässerung; d.h. gegenüber den herkömmlichen Verfahren fallen zwei Schritte fort. Dies führt in der Folge zu einer Platzersparnis, weniger Chemikalienverbrauch und höherer Effizienz.

Auch bei dem hier beschriebenen Verfahren kann eine Zugabe von Chemikalien zu einer erhöhten Effizienz der Entkalkung führen. Es hat sich aber gezeigt, dass gegenüber bekannten Verfahren mindestens ein Drittel weniger Chemikalienzugabe nötig ist, um zu denselben Resultaten zu gelangen.

Mit dem erfindungsgemäßen Verfahren ist es möglich, allein durch Belüftung des Prozesswassers, vorzugsweise mit einer Düse oder einem Injektor, einen Großteil des Kalks auszufällen und Schaum zu erzeugen, durch welchen ausgefällter Kalk aus dem Prozesswasser ausgeschleust werden kann. Man hat durch den erfindungsgemäßen Prozess, d.h. den Übergang des gelösten Kalks in Feststoff bei gleichzeitiger Ausschleusung mittels Austrag des Schaums, gegenüber dem herkömmlichen zwei-stufigen Entkalkungsverfahren mindestens eine Verfahrensstufe eingespart. Zudem ist gegenüber den herkömmlichen Entkalkungsverfahren, die industriell zur Anwendung kommen, der Chemikalienverbrauch erheblich geringer.

Vorteilhafte Ausgestaltungen und Weiterbildungen der Erfindung sind in den abhängigen Ansprüchen angegeben.

Gemäß einer bevorzugten Ausgestaltung der Erfindung hat das Gas Atmosphärendruck. Auf aufwändige Druckerhöhungseinrichtungen kann somit verzichtet werden. Hierbei ist es von besonderem Vorteil, als Gas Umgebungsluft zu verwenden; Luft ist ein praktisch überall in unbegrenzter Menge zur Verfügung stehendes und besonders kostengünstiges Gas.

Gemäß der Erfindung wird Prozesswasser sowie das Gas, insbesondere Luft, in einen Behälter eingedüst. Durch das Eindüsen findet eine intensive Vermischung von Wasser und Gas statt. Es ist möglich, dass das Volumen an eingedüstem Gas pro Volumeneinheit Prozesswasser V_{Gas}/Vwasser im Bereich von 2,5 bis 7,5, vorzugsweise bei ca. 5 liegt.

Mit dem beschriebenen Verfahren zur Belüftung des Prozesswassers, bei welchem ein Eindüsen von Gas in das Prozesswasser vorgenommen wird, wodurch sich im Prozesswasser Gasblasen bilden, ist es möglich, je nach Scherrate Gasblasen mit Durchmessern in einem Bereich von ca. 10 µm bis zu ca. einem Millimeter zu erzeugen.

Gemäß der Erfindung liegt der typische Durchmesser der Gasblasen, die sich durch das Eindüsen von Gas in das Prozesswasser bilden, bei ca. 1000 µm. Damit sind die gebildeten Gasblasen wesentlich größer als die bei einer DAF entstehenden Gasblasen, deren typische Gröβe in einem Bereich von 10 bis 100 µm liegt; auf diese Weise können sich Partikel des gefällten Calciumcarbonats, welche ggf. relativ groß sein können, an den Gasblasen anlagern und durch die Gasblasen effektiv an die Oberfläche getragen werden.

Gemäß einer bevorzugten Ausgestaltung der Erfindung wird das Prozesswasser, das sich in einem unteren Bereich des Behälters befindet, mit Hilfe einer Pumpe durch einen Injektor in einen oberen Bereich des Behälters gepumpt. Durch diese Wasserführung werden eine gute Durchmischung des Prozesswassers und eine besonders effektive Entkalkung erreicht.

Es versteht sich, dass die oben beschriebenen Verfahrensschritte Einbringen von Gas, insbesondere mittels Eindüsen, und Umpumpen bzw. Mischen gleichzeitig oder nacheinander erfolgen können.

Es ist vorteilhaft, wenn vor dem Einbringen des Gases in das Prozesswasser und/oder nach dem Beginn des Einbringens des Gases in das Prozesswasser eine Base wie NaOH oder Ca(OH)₂ dem Prozesswasser zugegeben wird. Beispielsweise kann NaOH in einer Dosierung von 0,015 Gew.-% des Prozesswassers zugegeben werden.

Eine Zugabe von alkalischen Chemikalien wie NaOH oder Ca(OH)₂ in das Prozesswasser unterstützt eine Erhöhung des pH-Werts des Prozesswassers, unterstützt eine Schaumbildung an einer Oberfläche des Prozesswassers und wirkt sich vorteilhaft auf die Größenverteilung der sich bildenden Calciumcarbonat-Partikel aus, fördert insbesondere eine Bildung größerer Calciumcarbonat-Partikel. Aufgrund der Tatsache, dass bei der vorliegenden Erfindung durch das Eindüsen von Gas, d.h. einen effektiven Strippungs-Vorgang, ohnehin relativ schnell der Bereich eines Reaktionsgleichgewichts erreicht wird, in dem Kalkstein ausfällt, kann eine Zugabe der alkalischen Chemikalien in einer relativ geringen Menge als eine unterstützende Aktion zur Verbesserung der Wirkung erfolgen, insbesondere um eine Ausfällung von Calciumcarbonat zu initiieren. Da die Verschiebung des pH-Werts hauptsächlich durch CO₂-Strippung erfolgt und die Zugabe der alkalischen Chemikalien nur eine unterstützende Funktion hat, kommt man gegenüber herkömmlichen Kalkfällungs-Verfahren mit einer erheblich reduzierten Menge an Chemikalien aus.

Es ist vorteilhaft, wenn vor dem Einbringen des Gases in das Prozesswasser dem Prozesswasser Impfkristalle zugegeben werden. Impfkristalle wirken sich vorteilhaft auf die Größenverteilung der sich bildenden Calciumcarbonat-Partikel aus. Beispielsweise können Impfkristalle in einer Dosierung von 0,01 Gew.-% des Prozesswassers zugegeben werden.

Es kann vorteilhaft sein, einem Prozesswasser, welches nur eine geringe stoffliche Konzentration aufweist, einen Inertstoff wie Sand, z.B. Quarzsand, hinzuzufügen. Der Sand bildet eine große Oberfläche, an der sich der ausgefällte Kalk anlagern kann. Alternativ können auch andere inerte Feststoffe mit entsprechenden Eigenschaften verwendet werden. Der mit Kalk belegte Sand kann über die Schaumphase aus dem Wasser ausgeschleust werden. Es ist möglich, die an den Sandkörnern sitzenden Kalkpartikel in einem Nebenprozess durch höhere Sandkonzentration, d.h. eine interne mechanische Entfernung des Kalks von den Sandkörnern, und eine pH-Erniedrigung durch Säurezugabe zu entfernen. Von Kalk gereinigter Sand kann dann erneut als Inertstoff verwendet werden.

Das Eindüsen von atmosphärischem Gas in das Prozesswasser erfolgt so, dass das Gas über einen Gaskanal seitlich einem Injektorkanal zugeführt wird, durch welchen kalkhaltiges Prozesswasser in eine Bütte fließt. Der Injektorkanal kann in Bezug auf das Gas selbstansaugend ausgebildet sein; es kann aber auch eine nicht selbstansaugende Düse Verwendung finden. Somit erfolgt die Vermischung von Gas und Prozesswasser bereits bevor das der Bütte zugeführte Prozesswasser in die Bütte eintritt.

Die im Verfahren verwendete Vorrichtung umfasst: eine Düse zum Entkalken von Prozesswasser, umfassend einen durchgehenden Kanal zur Durchleitung von Prozesswasser, in welchen seitlich ein Gaskanal mündet, durch welchen Gas in das Prozesswasser zuführbar ist; eine Luftzufuhr zum Zuführen von Gas in einen Gaskanal der Düse; und eine Leitung zum Zuführen von Prozesswasser in eine Einlassöffnung der Düse. Vorzugsweise ist die Düse selbstansaugend; in diesem Fall kann das dem Gaskanal zugeführte Gas denselben Druck wie die Umgebungsluft aufweisen, d.h. braucht nicht unter Überdruck zu stehen.

Gemäß der Erfindung umfasst die Vorrichtung eine Einrichtung zum Austragen von Schaum, welcher an der Oberfläche des Prozesswassers entstanden ist, d.h. eine Vorrichtung zum sogenannten "Skimmen". Dies kann eine Vorrichtung zum Abschöpfen, Abziehen oder Absaugen sein Dabei kann das Austragen des Schaums vollautomatisch erfolgen. Die Anwesenheit von Bedienpersonal kann somit auf Wartung und Reparatur reduziert werden.

Gemäß einer Weiterbildung der Erfindung kann die Düse in Form einer Fritte, insbesondere einer Glas- oder Keramikfritte, vorliegen.

Es ist möglich, dass die Vorrichtung zum Entkalken von Prozesswasser eine Flotationszelle, insbesondere eine Hybrid-Flotationszelle, ist. Eine Lösung der o. g. Aufgabe ist auch die Verwendung einer Flotationszelle, insbesondere einer Hybrid-Flotationszelle, zur Durchführung eines Verfahrens nach einem der Ansprüche 1 bis 5.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigt
- Fig. 1: ein erstes Schema des Kalk-Kohlensäure-Gleichgewichts;
- Fig. 2: ein zweites Schema des Kalk-Kohlensäure-Gleichgewichts;
- Fig. 3: eine Vorrichtung in schematischer Darstellung;
- Fig. 4: eine Massenbilanz;
- Fig. 5: eine Düse im Schnitt; und
- Fig. 6: ein Schema einer Entkalkung mit einer Flotationszelle.

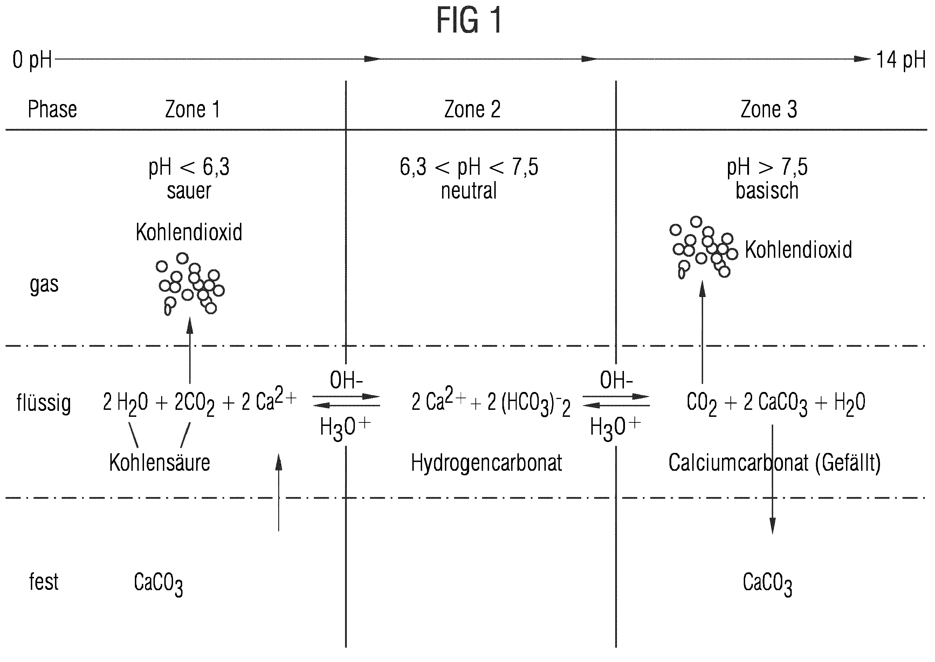

Fig. 1 zeigt ein erstes Schema des Kalk-Kohlensäure-Gleichgewichts. Am oberen Rand ist der gesamte pH-Bereich von 0 bis 14 angegeben. In Abhängigkeit vom pH-Wert werden horizontal drei Zonen unterschieden, jeweils vertikal unterteilt in die drei Phasen gas, flüssig und fest. Zwischen Zone 2 und 3 herrscht im Prozesswasser ein Gleichgewicht gemäß der o. a. Gleichung eq. 1. Wird nun durch das Einbringen von Luft in das Prozesswasser CO₂ verdrängt (= Strippen von CO₂), so verschiebt sich das Gleichgewicht in Richtung höherer pH-Werte, z.B. in Zone 3. Dadurch wird mehr HCO₃⁻ (löslich) zu CaCO₃ (fest) umgesetzt. Folglich entweicht gasförmiges Kohlendioxid CO₂ und festes Calciumcarbonat CaCO₃ fällt aus.

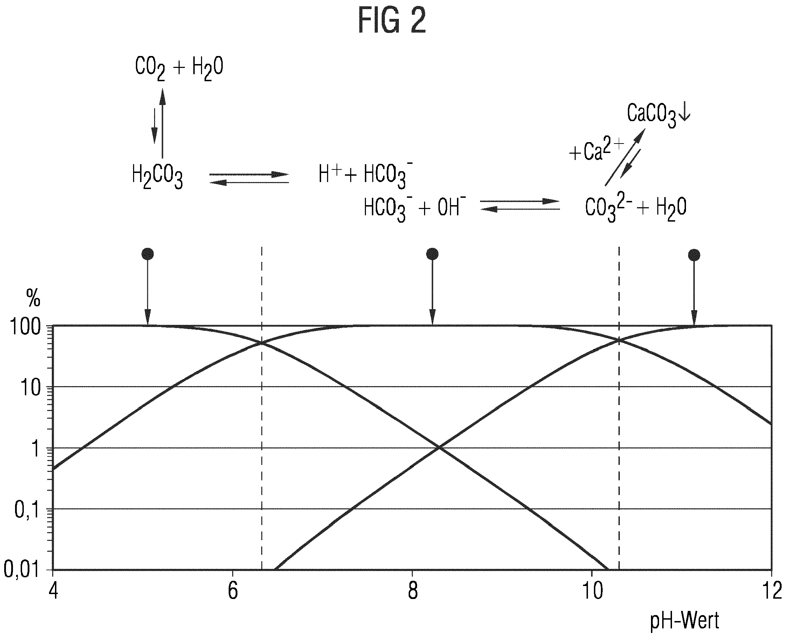

Fig. 2 zeigt ein Hägg-Diagramm des Kalk-Kohlensäure-Gleichgewichts. Über einer Skala des pH-Werts im Wertebereich von pH = 4 bis pH = 12 entlang der x-Achse sind entlang der y-Achse in logarithmischem Maßstab Prozentangaben der "Kohlensäureformen" CO₂, HCO₃⁻ und CO₃²⁻ aufgetragen, welche in den am oberen Bildrand angegebenen Reaktionsgleichungen vorkommen.

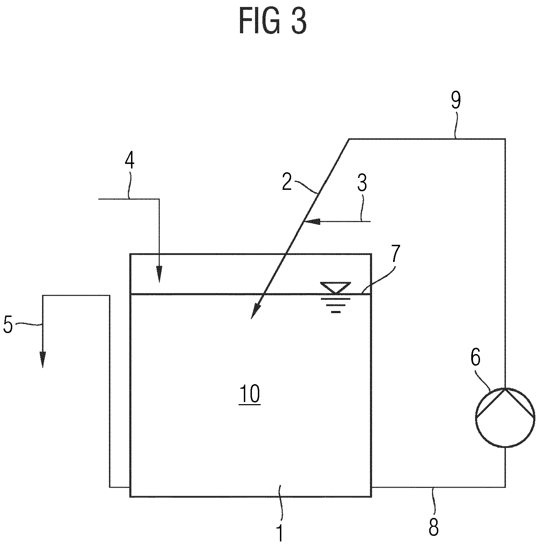

Fig. 3 zeigt eine Vorrichtung in schematischer Darstellung. Eine Bütte 1 ist bis zu einem Niveau 7 mit Prozesswasser 10 gefüllt, welches in einer auf Altpapier als Rohstoff basierenden Papierproduktion verwendet wird. Durch weitgehend geschlossene Prozesswasserkreisläufe in der Papierproduktion weist das Prozesswasser einen relativ hohen Gehalt an darin gelöstem Calciumcarbonat auf.

Aus dem unteren Bereich der Bütte 1 wird mittels einer Pumpe 6 Prozesswasser 10 über einen Abfluss 8 abgesaugt und durch eine Leitung 9 zu einem Injektor 2 gefördert. Der Abfluss 8 und die Leitung 9 können jeweils als eine Rohrleitung oder als ein Schlauch ausgebildet sein. Der in Form einer Düse ausgebildete Injektor 2 weist einen axialen Kanal auf, in welchen seitlich eine Luftleitung 3 einmündet. Während das Prozesswasser 10 durch den Kanal des Injektors gepumpt wird, wird dem Wasser durch die Luftleitung Luft beigemischt.

Das so entstandene Luft-Wasser-Gemisch wird unter Druck in den oberen Bereich der Bütte 1 eindüst, wodurch es zu einer Vermischung des eingedüsten Luft-Wasser-Gemisches mit dem Prozesswasser in der Bütte 1 kommt. Durch die eingebrachte Luft erfolgt eine Fällung von Calciumcarbonat in der Bütte 1. Die über den Injektor 2 in die Bütte 1 eingebrachte Luft bildet in der Bütte 1 Luftblasen. Dabei tritt üblicherweise eine Agglomeration auf, bei der sich zwei oder mehr Luftblasen zu einer größeren Blase vereinigen.

Bei einer DAF, wie sie bei herkömmlichen Entkalkungsverfahren eingesetzt wird, bilden sich relativ kleine Gasblasen, die sich an Calciumcarbonat-Partikel anlagern. Aufgrund der geringen Größe der Gasblasen, deren Durchmesser typischerweise im Bereich von 10 bis 100 µm liegt, sieht das Prozesswasser milchig aus. Dagegen bilden sich bei der erfindungsgemäß eingesetzten Flotation viele relativ große Gasblasen, deren typischer Durchmesser bei ca. 1000 µm liegt, an welche sich die Calciumcarbonat-Partikel anlagern. Partikel des gefällten Calciumcarbonats lagern sich also an den Luftblasen an und werden mit diesen an die Oberfläche 7 des Prozesswassers transportiert.

Der sich dort bildende Schaum wird zusammen mit den anhaftenden Calciumcarbonat-Partikeln abgeschöpft und aus dem Prozesswasser entfernt. Über den Wasserkreislauf wird das Prozesswasser wiederholt demselben Verfahren unterzogen, so dass der Gehalt an Calciumcarbonat stetig abnimmt.

Bei der intensiven Belüftung des zu behandelnden Wassers findet der Übergang des Kalks vom gelösten in den festen Zustand statt, bei einer gleichzeitigen Ausschleusung des festen Kalks mittels des sich entwickelnden Schaums. Im Gegensatz zu dem herkömmlichen zweistufigen mechanischen EntkalkungsVerfahren ist also nur eine einzige Verfahrenstufe nötig.

Die Vorrichtung umfasst außerdem einen Zulauf 4, über den zu entkalkendes Prozesswasser in die Bütte 1 gefördert werden kann, sowie einen Überlauf 5, durch den das Niveau 7 bei einem vorgegebenen Wert gehalten wird.

Im Folgenden werden drei unterschiedliche Varianten des Verfahrens vorgestellt, wobei die Prozentangaben als Gewichtsprozent zu verstehen sind. Bei allen drei Varianten wurden 20 Liter Prozesswasser über einen Zeitraum von 20 Minuten mit einem Verhältnis von 5 Liter Luft pro Liter Wasser belüftet. Gemäß einer ersten Variante werden dem Prozesswasser zunächst 0,01 % Impfkristalle und 0,015 % NaOH hinzugefügt, und dann über den Zeitraum von 20 min belüftet mit dem o.g. Verhältnis von 5 l Luft/l Wasser. Gemäß einer zweiten Variante werden dem Prozesswasser zunächst 0,01 % Impfkristalle hinzugefügt, dann über den Zeitraum von 20 min belüftet mit dem o.g. Verhältnis von 5 l Luft/l Wasser, dann dem Prozesswasser 0,015 % NaOH hinzugefügt und nachfolgend über einen Zeitraum von 5 min belüftet mit einem Verhältnis von 1,25 l Luft/l Wasser. Gemäß einer dritten Variante werden dem Prozesswasser zunächst 0,01 % Impfkristalle hinzugefügt, dann über den Zeitraum von 20 min belüftet mit dem Verhältnis von 5 l Luft/l Wasser, dann dem Prozesswasser 0,015 % NaOH hinzugefügt und nachfolgend ohne Belüftung über einen Zeitraum von 2 min mittels eines Rührgeräts durchmischt.

In jeder Variante wird während der Belüftung der Schaum abgetrennt. Für alle drei Prozessvarianten mit Schaumabtrennung sind sowohl die Wasserhärte am Prozessende als auch die CaCO₃-Partikelgrößenverteilung vergleichbar. Die erste Variante ist wegen der damit verbundenen relativ geringen Investitionskosten und der relativ einfachen Prozessführung besonders vorteilhaft.

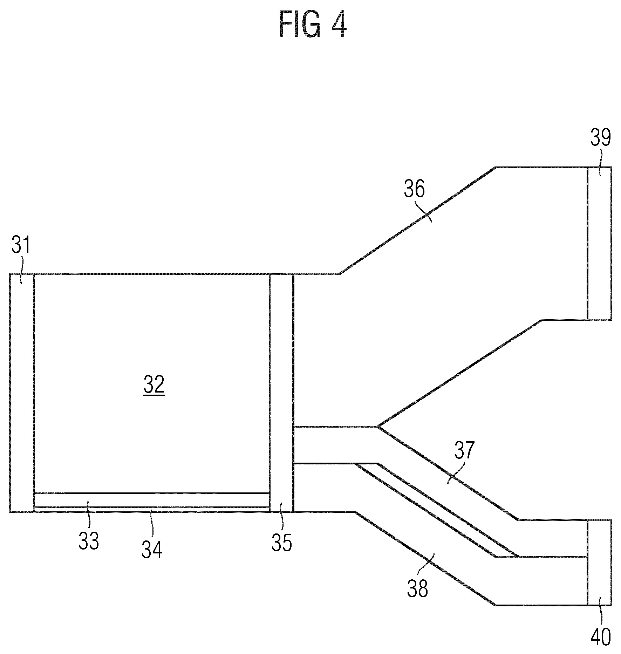

Fig. 4 zeigt eine Massenbilanz für eine Prozessführung gemäß der oben angegebenen ersten Variante. Die Ausgangssuspension 31 enthält 33,8 g (= 94,40 %) gelöstes Calciumcarbonat 32, 2 g (= 5,60 %) Impfkristalle 33 und 0,015 % Natronlauge 34, bezogen auf die Suspensionsmenge. Nach einer Belüftung 35 verteilen sich die Anteile wie folgt: Das über Schaum 39 ausgetragene Calciumcarbonat 36 hat eine Masse von 23,3 g (= 65,00 %), das in der Endsuspension 40 noch gelöste Calciumcarbonat 37 hat eine Masse von 5,4 g (= 15,00 %) und das in der Endsuspension 40 gefällt vorliegende Calciumcarbonat 38 hat eine Masse von 7,2 g (= 20,00 %).

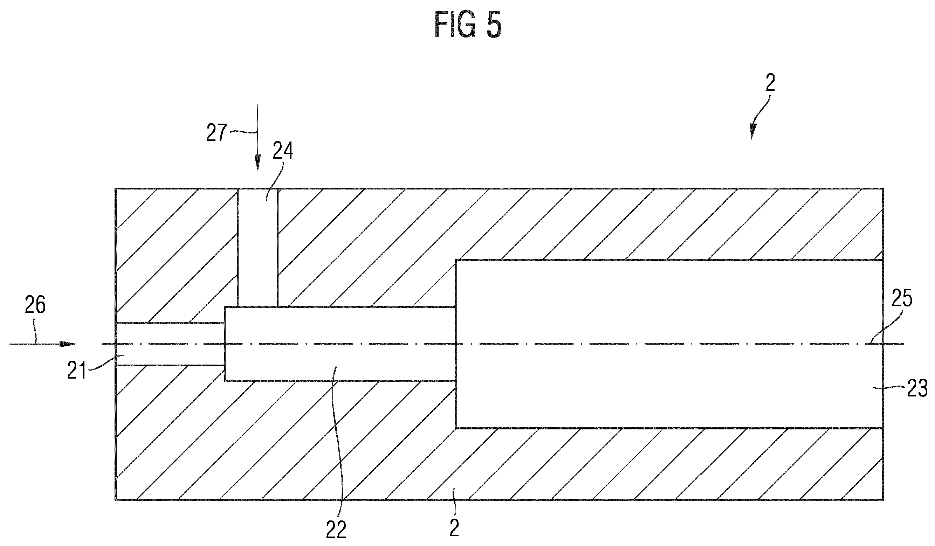

Fig. 5 zeigt einen axialen Schnitt einer Düse 2. Sie ist als ein z.B. metallischer Hohlzylinder ausgebildet, dessen Hohlraum einen die Stirnseiten des Hohlzylinders verbindenden Kanal 21, 22, 23 zum Transport von Prozesswasser ausbildet. Der den Düsenkörper durchlaufende Kanal besteht aus drei aneinandergrenzenden koaxialen zylindrischen Hohlräumen 21, 22, 23 mit jeweils konstantem Durchmesser, wobei ein Durchmesser eines in Fließrichtung 26 des Prozesswassers gesehen flussabwärts gelegenen Hohlraums größer als ein Durchmesser eines in Fließrichtung 26 des Prozesswassers gesehen flussaufwärts gelegenen Hohlraums ist. Auf diese Weise erweitert sich der Kanal stufenförmig in Fließrichtung 26 des Prozesswassers von einer relativ kleinen Eintrittöffnung zu einer relativ großen Austrittsöffnung.

In den mittleren Hohlraum 22 mündet ein senkrecht zur Kanalachse 25 verlaufender Gaskanal 24, in den ein Gas eingeleitet 27 und somit dem in dem Kanal 21, 22, 23 fließenden Prozesswasser zugemischt werden kann.

Es ist möglich, dass die selbstansaugende Injektordüse 2 auch für eine Deinking-Flotation verwendbar ist. Durch eine Koppelung des selbstansaugenden Injektorprinzips mit einem Stufendiffusor mit geeigneten Abmessungen wird die eingesaugte Luft in Blasen zerteilt und es entsteht eine hohe Turbulenz. Dies begünstigt den Stoffaustausch, der zum Strippen von CO₂ erwünscht ist und erzeugt auch den Schaum.

Gemäß einer beispielhaften Ausgestaltung der Düse 2 weist die Düse 21 einen Innendurchmesser von 10 mm, das Mischrohr 22 einen Innendurchmesser von 20 mm und der Luftkanal 24 ein 1/2-Zoll-Gewinde, d.h. einen Innendurchmesser von 12,7 mm, auf.

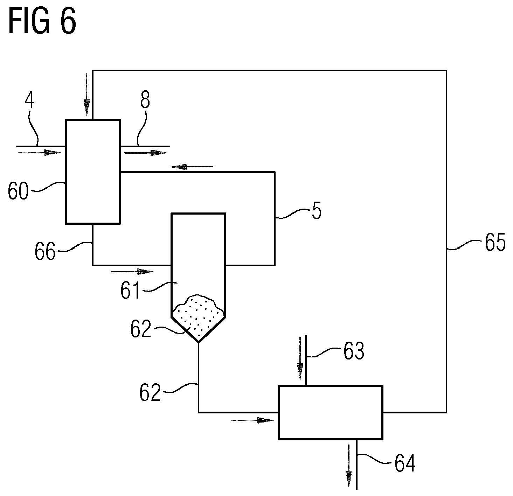

Fig. 6 zeigt ein Schema einer Entkalkung mit einer Flotationszelle 60, insbesondere einer Hybrid-Flotationszelle, wie sie z.B. in EP 1827699 B1 beschrieben ist. Eine Flotationszelle dient im Bergbau der Aufkonzentration von Metallerzen, um die Ausbeute der Aufbereitung zu erhöhen. Dazu wird das gemahlene Erz in Wasser aufgeschlämmt, durch eingeblasene Gasblasen an die Oberfläche transportiert und dort abgeschöpft.

Eine Hybrid-Flotationszelle des Typs SIMINE Hybrid Flot zeichnet sich dadurch aus, dass ein pneumatisches Einsprühverfahren mit der Säulenmethode kombiniert wird. Im ersten Schritt wird der mit Luft oder Gas versetzte Schlamm in die Flotationszelle eingesprüht. Durch einen hohen kinetischen Energieeintrag werden sehr feine Gasblasen erzeugt und mit Wertstoffpartikeln in Kontakt gebracht. Die so entstandenen Gasblasen-Wertstoffpartikel-Agglomerate steigen als Schaum an die Oberfläche, wo sie abgeschöpft werden. Im Säulenbereich werden etwas größere Blasen erzeugt, um gröbere Partikel zu erfassen. Das Einsprühen des Schlammgemisches trägt genügend Bewegungsenergie in die Flotationszelle ein, so dass ein eigenes Rührwerk, dessen Antrieb und die dafür erforderliche Energie entfallen.

Einer Flotationszelle 60 wird über einen Zulauf 4 zu enthärtendes Prozesswasser zugeführt. Über einen Ablauf 8 wird der Flotationszelle 60 enthärtetes Prozesswasser entnommen. Bei der Anwendung einer Flotationszelle 60 zur Enthärtung wird durch die Belüftung zusätzlich eine Strippung erhalten, die eine pH-Verschiebung zu höheren Werten hin hervorruft, so dass Calciumcarbonat fein verteilt ausfällt. Je nach Größe werden die Calciumcarbonat-Partikel durch Glasblasen an die Wasseroberfläche getragen bzw. lagern sich an Feststoffen ab und werden mit diesen an die Wasseroberfläche getragen.

Zu enthärtende Prozesswässer können nur eine relativ geringe Konzentration an Feststoffen aufweisen, so dass es in diesem Fall von Vorteil sein kann, den Feststoffanteil durch einen Inertstoff zu erhöhen. Beispielsweise kann festgelegt sein, dass ein Feststoffanteil von 20 Gew.-% im Prozesswasser einen Minimalwert darstellt; falls dieser Wert unterschritten wird, wird eine Erhöhung des Feststoffanteils durch Zugabe von Inertstoff vorgenommen. Es kann vorteilhaft sein, durch Zugabe von Inertstoff den Feststoffanteil in einem Bereich von 30 bis 40 Gew.-% zu halten.

Dieser Inerstoff kann beispielsweise Sand, z.B. Quarzsand, sein. Der Sand bildet eine große Oberfläche, an der sich der gefällte Kalk anlagert. Alternativ können auch andere inerte Feststoffe mit entsprechenden Eigenschaften genommen werden. Der mit Kalk belegte Sand wird über die Schaumphase aus der Flotation 60 ausgeschleust 66.

In einem Nebenprozess lässt man den mit Kalk belegten Sand sedimentieren 61. Durch höhere Sandkonzentration kann in einem ersten Schritt eine interne mechanische Entfernung von Kalk von den Sandkörnern erfolgen. In einem nachfolgenden Schritt wird der mit Kalk belegten Sand 62 einer Säurebehandlung zugeführt: eine pH-Wert-Erniedrigung durch Säurezugabe 63 löst Kalk von den Sandkörnern. Der abgelöste Kalk wird mit der Säure-Lösung abgeführt 64. Der vom Kalk gereinigte Sand kann als Inertstoff in die Flotationszelle 60 rückgeführt 65 werden.

Der Vorteil der Anwendung einer Flotationszelle zur Entkalkung von Prozesswasser liegt in einer vollständigen Entkalkung, einem sehr geringen Chemikalienverbrauch und in der Schnelligkeit des Verfahrens. Somit wird eine Kalkablagerung nach dem Flotations-Prozess weitestgehend ausgeschlossen.

Obwohl die Erfindung im Detail durch die bevorzugten Ausführungsbeispiele näher illustriert und beschrieben wurde, so ist die Erfindung nicht durch die offenbarten Beispiele eingeschränkt.

## Patentansprüche

1. Verfahren zum Entkalken von Prozesswasser (10), mit folgenden Schritten:
- Belüftung des Prozesswassers (10) durch Eindüsen von Gas in das Prozesswasser (10) mittels einer Düse (2), umfassend einen durchgehenden Kanal (21, 22, 23) zur Durchleitung von Prozesswasser, in welchen seitlich ein Gaskanal (24) mündet, durch welchen Gas in das Prozesswasser zuführbar ist, wobei sich im Prozesswasser (10) Gasblasen bilden, wobei der typische Durchmesser der Gasblasen ca. 1000 µm beträgt und die somit wesentlich größer sind als die bei einer Druckentspannungsflotation entstehenden, eine typische Gröβe in einem Bereich von 10 bis 100 µm aufweisenden Gasblasen;
- Transport von Calciumcarbonat, welches durch eine aufgrund der Belüftung eintretende Verschiebung des Dissoziationsgleichgewichts der Kohlensäure in dem Prozesswasser ausfällt, wobei sich Partikel des gefällten Calciumcarbonats an den Gasblasen anlagern, mithilfe der Gasblasen an eine Oberfläche des Prozesswassers (10); und
- Austragen von an der Oberfläche des Prozesswassers (10) entstehendem Schaum.

2. Verfahren nach Anspruch 1, wobei das Gas Umgebungsluft ist.

3. Verfahren nach Anspruch 1 oder 2, wobei das Volumenverhältnis V_{LUft}/V_{Wasser} von eingedüster Luft zu Prozesswasser im Bereich von 2,5 bis 7,5 liegt.

4. Verfahren nach einem der vorhergehenden Ansprüche, wobei vor dem Einbringen des Gases in das Prozesswasser und/oder nach dem Beginn des Einbringens des Gases in das Prozesswasser dem Prozesswasser eine Base wie NaOH oder Ca(OH)₂ zugegeben wird.

5. Verfahren nach einem der vorhergehenden Ansprüche, wobei, insbesondere vor dem Einbringen des Gases in das Prozesswasser, dem Prozesswasser Impfkristalle und/oder ein Inertstoff zugegeben werden.

6. Verwendung einer Flotationszelle (60), insbesondere einer Hybrid-Flotationszelle, zur Durchführung eines Verfahrens nach einem der Ansprüche 1 bis 5.

## Claims

1. Method for decalcifying process water (10), having the following steps:
- aerating the process water (10) by injecting gas into the process water (10) by means of a nozzle (2), comprising a continuous duct (21, 22, 23) for transporting process water, into which a gas duct (24) laterally feeds, through which gas can be fed into the process water, wherein gas bubbles form in the process water (10), wherein the typical diameter of the gas bubbles is approx. 1000 µm, thus making them significantly larger than the gas bubbles having a typical size of between 10 and 100 µm which arise during dissolved air flotation;
- transporting calcium carbonate which precipitates in the process water because of a change in the dissociation equilibrium of the carbonic acid occurring as a result of the aeration, wherein particles of the precipitated calcium carbonate adsorb on the gas bubbles, on a surface of the process water (10) with the assistance of the gas bubbles; and
- discharging foam arising at the surface of the process water (10).

2. Method according to claim 1, wherein the gas is ambient air.

3. Method according to claim 1 or 2, wherein the volume ratio V_{Air}/V_{Water} of injected air to process water lies in the range between 2.5 and 7.5.

4. Method according to one of the preceding claims, wherein prior to the introduction of the gas into the process water and/or after the start of the introduction of the gas into the process water, a base such as NaOH or Ca(OH)₂ is added to the process water.

5. Method according to one of the preceding claims, wherein in particular prior to the introduction of the gas into the process water, seed crystals and/or an inert substance are added to the process water.

6. Use of a flotation cell (60), in particular a hybrid flotation cell, for performing a method according to one of claims 1 to 5.

## Revendications

1. Procédé de détartrage d'eau ( 10 ) de processus, comprenant les stades suivants :
- envoi d'air dans l'eau de processus par injection de gaz dans l'eau (10) de processus au moyen d'une buse (2) comprenant un canal ( 21, 22, 23 ) continu pour faire passer de l'eau de processus, dans lequel débouche latéralement un canal ( 24 ) pour du gaz par lequel du gaz peut être envoyé dans l'eau de processus, des bulles de gaz se formant dans l'eau ( 10 ) de processus, le diamètre typique des bulles de gaz étant d'environ 1000 µm qui sont ainsi sensiblement plus grandes que les bulles de gaz se créant par flottation avec détente de pression, et ayant une dimension typique dans la plage de 10 à 100 µm,
- transport, à l'aide des bulles de gaz sur une surface de l'eau ( 10 ) de processus, de carbonate de calcium qui précipite dans l'eau de processus par un déplacement, se produisant en raison de l'envoi d'air, de l'équilibre de dissociation de l'acide carbonique, des particules du carbonate de calcium précipitant sur les bulles de gaz et
- évacuation de la mousse se créant à la surface de l'eau ( 10 ) de processus.

2. Procédé suivant la revendication 1, dans lequel le gaz est de l'air ambiant.

3. Procédé suivant la revendication 1 ou 2, dans lequel le rapport en volume V_{Luft}/V_{Wasser} de l'air injecté à l'eau de processus va de 2,5 à 7, 5.

4. Procédé suivant l'une des revendications précédentes, dans lequel, avant d'envoyer le gaz dans l'eau de processus et/ou après le début de l'envoi du gaz dans l'eau de processus, on ajoute une base comme NaOH ou Ca( OH )₂ à l'eau de processus.

5. Procédé suivant l'une des revendications précédentes, dans lequel, notamment avant l'envoi du gaz dans l'eau de processus, on ajoute des cristaux de germe et/ou une substance inerte à l'eau de processus.

6. Utilisation d'une cellule ( 60 ) de flottation, notamment d'une cellule de flottation hybride, pour effectuer un procédé suivant l'une des revendications 1 à 5.
